# EUROPÄISCHE PATENTANMELDUNG

(11) **EP 1 930 710 A2**
(43) Veröffentlichungstag der Anmeldung: **11.06.2008**
(21) Anmeldenummer: 07020872.3
(22) Anmeldetag: 25.10.2007
(51) Int. Cl.: G01L 19/08

(54) **Vorrichtung zum Ermitteln einer Zustandsgröse einer zu untersuchenden Einrichtung**

(30) Priorität: 06.12.2006 DE 102006057468
(71) Anmelder: Hydac Electronic GmbH, 66128 Saarbrücken (DE)
(72) Erfinder: Herrmann, Thomas, 66287 Quierscheid (DE)
(74) Vertreter: Bartels & Partner

(57) **Zusammenfassung**

Die Erfindung betrifft eine Vorrichtung (1) zum Ermitteln einer Zustandsgröße einer zu untersuchenden Einrichtung (2), wobei die Vorrichtung (1) einen Anschlusskörper (4) zum Verbinden der Vorrichtung (1) mit der zu untersuchenden Einrichtung (2), ein Sensorelement (6) zur Wandlung der Zustandsgröße in ein Messsignal sowie eine Anzeigeeinrichtung (8) für das Messsignal oder für ein daraus abgeleitetes Signal und/oder eine Verbindungseinrichtung (10) für Energieversorgungs- und/oder Signalleitungen aufweist, dadurch gekennzeichnet, dass das Sensorelement (6) drehfest mit der Anzeigeeinrichtung (8) und/oder der Verbindungseinrichtung (10) verbunden ist, und dass das Sensorelement (6) gegenüber dem Anschlusskörper (4) drehbar ist.

## Beschreibung

Die Erfindung betrifft eine Vorrichtung zum Ermitteln einer Zustandsgröße einer zu untersuchenden Einrichtung, insbesondere eine Sensorvorrichtung zum Ermitteln des Drucks, der Temperatur, der Feuchtigkeit, des Füllstandes, des Volumenstroms und dergleichen eines strömungsfähigen Fluids oder auch eine Sensorvorrichtung zum Ermitteln der Länge, der Auslenkung und dergleichen einer mechanischen Anordnung.

Derartige Vorrichtungen müssen mit der zu untersuchenden Einrichtung in der Regel fest verbunden werden. Hierzu können solche Vorrichtungen beispielsweise unmittelbar oder mittelbar in die zu untersuchende Einrichtung eingeschraubt oder eingesteckt werden. Dabei ist es nicht zu vermeiden, dass eine an der Vorrichtung angeordnete Anzeigeeinrichtung oder eine Verbindungseinrichtung nach dem Festlegen der Vorrichtung an der Einrichtung nicht optimal platziert ist, beispielsweise eine Anzeigeeinrichtung nicht oder nur mit einem erheblichen Aufwand abgelesen werden kann oder eine Verbindungseinrichtung nur schwer für eine Anschlussleitung zugänglich ist.

Aus der DE 102 12 767 A1 ist eine gattungsgemäße Vorrichtung bekannt, bei welcher das Sensorelement drehfest mit der zu untersuchenden Einrichtung verbindbar ist und ein eine Anzeigeeinrichtung und eine Verbindungseinrichtung aufweisendes Gehäuse gegenüber dem Sensorelement schwenkbar ist. Dadurch kann nach dem Einschrauben der Vorrichtung in die zu untersuchende Einrichtung das Gehäuse so gedreht werden, dass die Anzeigeeinrichtung optimal ablesbar ist oder eine Verbindungseinrichtung gut zugänglich ist.

Die bei der bekannten Vorrichtung mögliche Drehbarkeit der Anzeigeeinrichtung und der Verbindungseinrichtung gegenüber dem Sensorelement erfordert für die elektrische Verbindung der Anzeige- und Verbindungseinrichtung mit dem Sensorelement einen erheblichen Aufwand, um bei hoher Betriebssicherheit die Drehbeweglichkeit zu ermöglichen.

Der Erfindung liegt daher die Aufgabe zugrunde, eine Vorrichtung und ein zugehöriges Herstellverfahren bereitzustellen, welche die Nachteile des Standes der Technik überwinden. Insbesondere soll mit verringertem Aufwand bei gleichbleibend hoher Betriebssicherheit die Drehbeweglichkeit der Anzeigeeinrichtung und/oder der Verbindungseinrichtung gegenüber dem Anschlusskörper möglich sein. In einer Ausführungsart soll darüber hinaus nicht nur eine Schwenkbarkeit möglich sein, sondern ein beliebiges Drehen der Anzeige- und/oder Verbindungseinrichtung gegenüber dem Anschlusskörper.

Diese Aufgabe ist durch die im Anspruch 1 bestimmte Vorrichtung gelöst. Besondere Ausführungsarten der Erfindung sind in den Unteransprüchen bestimmt.

Die Vorrichtung kann entweder nur eine Anzeigeeinrichtung für die Anzeige des Messsignals oder eines daraus abgeleiteten Signals aufweisen oder nur eine Verbindungseinrichtung für Energieversorgungs- und/oder Signalleitungen aufweisen. Im letztgenannten Fall kann die Anzeige des Messsignals oder eines daraus abgeleiteten Signals auch von einer entfernt von der Vorrichtung angeordneten Anzeigeeinrichtung angezeigt werden oder von einer neben- oder übergeordneten Steuereinheit. In einer Ausführungsart ist in der Vorrichtung selbst ein Energiespeicher angeordnet, beispielsweise ein elektrochemischer Energiespeicher wie eine Batterie oder ein Akkumulator, und es ist keine elektrische oder sonstige Verbindung der Vorrichtung nach außerhalb erforderlich, insbesondere keine Energieversorgungsleitung.

In einer Ausführungsart weist die Vorrichtung sowohl eine Anzeigeeinrichtung als auch eine Verbindungseinrichtung auf, wobei die Verbindungseinrichtung entweder nur Energieversorgungsleitungen oder nur Signalleitungen aufweist, oder sowohl eine Energieversorgungsleitung als auch eine Signalleitung. Dabei handelt es sich um elektrische Verbindungen, die beispielsweise über Steck- oder Schraubverbinder herstellbar ist.

In einer Ausführungsart ist das Sensorelement drehfest mit der Anzeigeeinrichtung verbunden. Dies hat den Vorteil, dass bei einem Drehen der Anzeigeeinrichtung das Sensorelement mitgedreht wird und insbesondere eine Verbindungsleitung zwischen dem Sensorelement und der Anzeigeeinrichtung, die gegebenenfalls über eine in der Vorrichtung angeordnete Auswerteeinrichtung erfolgt, mitgedreht wird und dementsprechend keine Dreh- oder Torsionsbelastung für die Verbindungsleitungen auftritt. Gegenüber dem Stand der Technik ist weiterhin vorteilhaft, dass nicht nur eine Schwenkbewegung oder eine begrenzte Drehbewegung möglich ist, sondern auch ein endloses Drehen, was in der Anwendung eine Vereinfachung der Handhabung und eine höhere Robustheit und mithin eine höhere Betriebssicherheit mit sich bringt. Das Gleiche gilt für den Fall, dass das Sensorelement alternativ oder ergänzend drehfest mit der Verbindungseinrichtung verbunden ist.

In einer Ausführungsart weist der fluidführende Anschlusskörper Schraubverbindungs- oder Renkverbindungsmittel auf, um die Vorrichtung an der zu untersuchenden Einrichtung festzulegen. Dadurch kommt es bei der Festlegung zu einer Drehbewegung der Vorrichtung, die insbesondere im Falle einer Schraubverbindung dazu führt, dass die Platzierung und Ausrichtung der Anzeigeeinrichtung und/oder der Verbindungseinrichtung im festgelegten Zustand nicht oder jedenfalls nicht exakt genug vorhersagbar ist. Bei der erfindungsgemäßen Vorrichtung kann diese Platzierung und Ausrichtung nach dem Festlegen entsprechend den Anforderungen eingestellt werden, indem die Anzeigeeinrichtung und/oder die Verbindungseinrichtung gegenüber dem feststehenden Anschlusskörper in gewünschter Weise gedreht wird. Das Sensorelement ist hierzu gegenüber dem Anschlusskörper drehbar.

In einer Ausführungsart ist die Anzeigeeinrichtung und/oder die Verbindungseinrichtung an einem Gehäuseteil der Vorrichtung festgelegt. in diesem Fall ist das Sensorelement drehfest mit diesem Gehäuseteil verbunden. In einer Ausführungsart ist das gesamte Gehäuse gegenüber dem Anschlusskörper drehbar.

In einer Ausführungsart weist die Vorrichtung eine Auswerteeinrichtung auf, die beispielsweise auf einer Bauteilplatine angeordnet ist. Die Auswerteeinrichtung kann in dem Gehäuse drehfest angeordnet sein und mit dem Sensorelement und der Anzeigeeinrichtung und/oder der Verbindungseinrichtung drehfest verbunden sein. Die Verbindung der Auswerteeinrichtung mit dem Sensorelement und der Anzeigeeinrichtung und/oder der Verbindungseinrichtung erfolgt beispielsweise durch elektrische oder faseroptische Verbindungsleitungen.

In einer Ausführungsart weist der Anschlusskörper eine mindestens abschnittsweise hohlzylindrische Öffnung auf, insbesondere eine mindestens abschnittsweise hohle kreiszylindrische Öffnung. In dieser Öffnung ist ein Anschlussstück drehbar gelagert, das mit dem Sensorelement drehfest verbunden ist. Das Anschlussstück ist auf seiner Außenfläche mindestens abschnittsweise kreiszylindrisch ausgebildet und dadurch drehbar in dem Anschlusskörper gelagert. Das Anschlussstück kann eine hohlzylindrische Bohrung aufweisen, beispielsweise um eine Verbindung zwischen der zu untersuchenden Einrichtung und einem in dem Gehäuse der Vorrichtung angeordneten Sensorelement bereitzustellen. Insbesondere kann die Anschlussstelle an der zu untersuchenden Einrichtung axial gegenüber dem an dem Anschlussstück festgelegten Sensorelement liegen.

In einer Ausführungsart weist der Anschlusskörper einen kegelförmigen Abschnitt auf, und auch das Anschlussstück kann einen korrespondierenden kegelförmigen Abschnitt aufweisen. Vorzugsweise weitet sich der kegelförmige Abschnitt in Richtung auf die Anschlussstelle der Vorrichtung zu der zu untersuchenden Einrichtung hin auf. Im Bereich des kegelförmigen Abschnitts kann eine Dichtung angeordnet sein für eine Abdichtung der Anschlussstelle. Durch die Anordnung der Dichtung im Bereich des kegelförmigen Abschnitts wird erreicht, dass die druckbelastete Fläche des Anschlussstücks größer ist als die projizierte Fläche der Dichtgeometrie und dadurch eine sichere Abdichtung gewährleistet ist. Der von der Kegelfläche mit der Längsachse des Anschlussstücks eingeschlossene Winkel beträgt zwischen 10 und 60°, vorzugsweise zwischen 20 und 40°, und insbesondere etwa 30°.

In einer Ausführungsart ist die Dichtung in eine Ringnut eingesetzt, die im Bereich des kegelförmigen Abschnitts in dem Anschlusskörper und/oder in dem Anschlussstück angeordnet ist. Vorzugsweise ist die Ringnut im Anschlussstück angeordnet, weil dadurch die Montage der Vorrichtung vereinfacht ist.

In einer Ausführungsart erstreckt sich das Anschlussstück ausgehend von der Anschlussstelle an die zu untersuchende Einrichtung bis in das Gehäuse der Vorrichtung hinein. Dadurch kann das Sensorelement innerhalb des Gehäuses angeordnet werden und gemeinsam mit dem Gehäuse gegenüber dem Anschlusskörper gedreht werden. Die durch das Gehäuse umschlossene Baueinheit kann dadurch sehr robust hergestellt werden und beispielsweise auch vergossen werden, um die Betriebssicherheit weiter zu erhöhen. In einer Ausführungsart ist das Sensorelement an einem in das Gehäuse hineinragenden stirnseitigen Ende des Anschlussstücks angeordnet, insbesondere dort aufgeschweißt, verlötet, verklebt oder dergleichen.

In einer Ausführungsart weist die Vorrichtung eine Feststelleinrichtung auf, mittels der die Drehbeweglichkeit des Sensorelements gegenüber dem Anschlusskörper lösbar feststellbar ist. Die Feststelleinrichtung kann ein Feststellmittel aufweisen, das unmittelbar auf das Anschlussstück wirkt, beispielsweise einen in den Anschlusskörper eindrehbaren Gewindestift, der in klemmende Anlage an das Anschlussstück bringbar ist.

In einer Ausführungsart weist die Vorrichtung eine Rasteinrichtung auf, durch welche die Drehbeweglichkeit des Sensorelements gegenüber dem Anschlusskörper in vorgegebenen Positionen rastbar ist. Dadurch können beispielsweise in Umfangsrichtung um die Drehachse in Winkelabständen von 15, 30, 45 oder 90° Rastpositionen vorgesehen sein, die eine einfache Ausrichtung und Positionierung der Anzeigeeinrichtung und/oder der Verbindungseinrichtung ermöglicht. Die Rasteinrichtung kann Rastmittel aufweisen, die zwischen dem Anschlusskörper und dem Anschlussstück oder dem Gehäuse wirken, beispielsweise eine Federscheibe, die sich an dem Gehäuse abstützt und in rastende Anlage an dem Anschlusskörper gehalten ist.

In einer Ausführungsart weist die Vorrichtung Reiberhöhungsmittel auf, durch welche der bei einer Drehbewegung des Sensorelements gegenüber dem Anschlusskörper auftretende Reibwiderstand erhöht ist. Dadurch kann ein unbeabsichtigtes oder unerwünschtes Drehen des Gehäuses und mithin der Anzeigeeinrichtung und/oder der Verbindungseinrichtung gegenüber dem Anschlusskörper, beispielsweise auch aufgrund auftretender Vibrationen, zuverlässig verhindert werden.

Weitere Vorteile, Merkmale und Einzelheiten der Erfindung ergeben sich aus den Unteransprüchen und der nachfolgenden Beschreibung, in der unter Bezugnahme auf die Zeichnungen mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.
- Fig. 1: zeigt einen Schnitt durch einer erfindungsgemäße Vorrichtung,
- Fig. 2: zeigt einen Ausschnitt eines zweiten Ausführungsbeispiel der Erfindung, und
- Fig. 3: zeigt einen Ausschnitt eines dritten Ausführungsbeispiels der Erfindung.

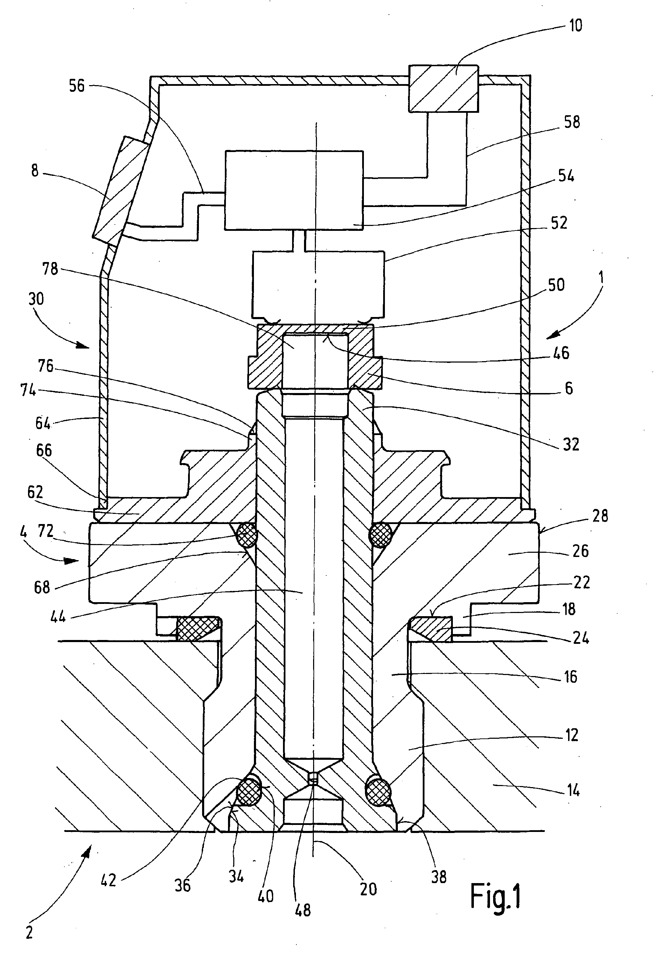

Die Fig. 1 zeigt einen Schnitt durch einer erfindungsgemäße Vorrichtung 1 zum Ermitteln einer Zustandsgröße einer zu untersuchenden Einrichtung 2, im dargestellten Ausführungsbeispiel eine Druckmessvorrichtung zum Ermitteln des Drucks in der Einrichtung 2.

Die Vorrichtung 1 weist einen Anschlusskörper 4 auf zum Verbinden der Vorrichtung 1 mit der zu untersuchenden Einrichtung 2. Weiterhin weist die Vorrichtung 1 ein Sensorelement 6 zur Wandlung der Zustandsgröße in ein Messsignal auf. Die Vorrichtung weist außerdem sowohl eine Anzeigeeinrichtung 8 für die Anzeige des Messsignals oder eines daraus abgeleiteten Signals als auch eine Verbindungseinrichtung 10 für die Energieversorgung oder für Signalleitungen auf. Bei der Anzeigeeinrichtung 8 kann es sich um eine Messwertanzeige handeln, beispielsweise eine LED-oder LCD-Anzeige, oder um einen optischen oder akustischen Signalgeber. Die Verbindungseinrichtung 10 kann beispielsweise als elektrische Steckverbindung oder Schraubverbindung ausgeführt sein. Es sind auch Ausführungsbeispiele möglich, die entweder nur eine Anzeigeeinrichtung 8 oder nur eine Verbindungseinrichtung 10 aufweisen. Wenn keine Verbindungseinrichtung 10 vorgesehen ist, kann die Energie für den Betrieb der Vorrichtung beispielsweise durch eine in der Vorrichtung 1 angeordneten Energiespeicher bereitgestellt werden, beispielsweise durch eine Batterie oder einen Akkumulator. Wenn keine Anzeigeeinrichtung 8 vorgesehen ist, kann über die Verbindungseinrichtung 10 eine Signalausgabe zu einer entfernt von der Vorrichtung 1 angeordneten Anzeigeeinheit oder zu einer Steuereinrichtung vorgesehen sein.

Der Anschlusskörper 4 weist an seinem der Einrichtung 2 zugeordneten Ende auf der Außenseite ein Einschraubgewinde 12 auf, mittels dem der Anschlusskörper 4 in eine korrespondierende Gewindebohrung in der Abschlusswand 14 der Einrichtung 2 einschraubbar ist und damit die Vorrichtung 1 mit der Einrichtung 2 verbindbar ist. Das Einschraubgewinde 12 ist vorzugsweise ein Normgewinde.

Anschließend an dem zapfenförmigen Abschnitt 16 des Anschlusskörpers 4, der das Einschraubgewinde 12 trägt, weist der Anschlusskörper 4 einen zweiten Abschnitt 18 auf, der in Bezug auf die Einschraubachse 20 eine größere radiale Erstreckung aufweist und an seiner der Einrichtung 2 zugewandten Stirnseite eine zur Einrichtung 2 hin offene umlaufende erste Ringnut 22 aufweist, in welche eine erste Ringdichtung 24 einlegbar ist, die beim Einschrauben des Anschlusskörpers 4 in die Abschlusswand 14 in dichte Anlage an die Abschlusswand 14 kommt und damit die Verbindung der Vorrichtung 1 mit der Einrichtung 2 abdichtet. Im weiteren Verlauf weist der Anschlusskörper 4 einen flanschartig verbreiterten Abschnitt 26 auf, der auf seiner Außenumfangsfläche eine Werkzeugangriffsfläche 28 ausbildet, beispielsweise einen Außensechskant.

Das innerhalb des Gehäuses 30 angeordnete Sensorelement 6 ist an einem von der Einrichtung 2 entfernt angeordnete stirnseitigen Ende eines Anschlussstücks 32 festgelegt. Je nach Anwendungsfall und insbesondere zu ermittelnder Zustandsgröße kann das Sensorelement 6 auch an oder nahe dem der Einrichtung 2 zugewandten Ende festgelegt sein.

Das Anschlussstück 32 ist über einen weiten Bereich seiner axialen Erstreckung entlang der Einschraubachse 20 außenumfangsseitig kreiszylindrisch ausgebildet und in einer entsprechenden, mindestens abschnittsweise kreiszylindrischen Bohrung in dem Anschlusskörper 4 drehbar geführt und gelagert. An ihrem der Einrichtung 2 zugeordneten Ende sind sowohl der Anschlusskörper 4 als auch das Anschlussstück 32, die axial bündig zueinander und zu der Innenseite der Abschlusswand 14 sind, kegelförmig ausgebildet, wobei der Anschlusskörper 4 hierzu einen innenkegelförmigen Abschnitt 34 aufweist, der sich in Richtung auf die Einrichtung 2 aufweitet, und das Anschlussstück 32 einen außenkegelförmigen Abschnitt 36 aufweist. Zum Ende hin gehen die kegelförmigen Abschnitte des Anschlusskörpers 4 und des Anschlussstücks 32 in einen kreiszylindrischen Endabschnitt 38 über.

Im Bereich des außenkegelförmigen Abschnitts 36 weist das Anschlussstück 32 auf der Außenseite eine umlaufende zweite Ringnut 40 auf, in welche eine zweite Ringdichtung 42 eingelegt ist. Die zweite Ringdichtung 42 dichtet den Übergang zwischen dem Anschlusskörper 4 und dem Anschlussstück 32 zuverlässig ab. Durch die Anordnung der zweiten Ringdichtung 42 im Bereich des außenkegelförmigen Abschnitts 36 wird in der Art eines Druckübersetzungsprinzips sichergestellt, dass die aufgrund des in der Einrichtung 2 herrschenden Überdrucks druckbelastete Fläche des Anschlussstücks 32 größer ist als die projizierte Fläche der sich durch die zweite Ringdichtung 42 ergebenden Dichtgeometrie. Dadurch wird die zweite Ringdichtung 42 spaltfrei an den Anschlusskörper 4 und das Anschlussstück 32 angepresst.

Das Anschlussstück 32 weist eine sich über die gesamte Längsausdehnung erstreckende Bohrung 44 auf, über welche eine Druckseite 46 des Sensorelements 6 in Verbindung mit der Einrichtung 2 steht. Die Bohrung 44 ist dabei als Stufenbohrung ausgebildet und weist vorzugsweise nahe oder an ihrem der Einrichtung 2 zugewandten Ende einen Dämpfungsabschnitt 48 auf, der eine geringere Querschnittsfläche aufweist als die sich daran anschließenden Abschnitte der Bohrung 44.

Das Sensorelement 6 ist drehfest mit dem Anschlussstück 32 verbunden, das seinerseits drehbar gegenüber dem Anschlusskörper 4 ist. Auf seiner der Druckseite 46, die beispielsweise durch die Rückseite einer durch Differenzdruckbeaufschlagung auslenkbaren Membran 50 gebildet ist, sind elektrische Anschlüsse vorgesehen, an welche erste Anschlussleitungen 52 anschließbar sind, die, entweder unmittelbar oder - wie im dargestellten Ausführungsbeispiel - über eine Auswerteeinrichtung 54 und zweite Anschlussleitungen 56, mit einer an einer Außenseite des Gehäuses 30 angeordneten Anzeigeeinrichtung 8 verbindbar sind. Im dargestellten Ausführungsbeispiel weist die Vorrichtung 1 außerdem die an dem der Einrichtung 2 abgewandten stirnseitigen Ende des Gehäuses 30 angeordnete Verbindungseinrichtung 10 auf, die über dritte Anschlussleitungen 58 mit der Auswerteeinrichtung 54 verbunden ist und über die ein Signalaustausch der Vorrichtung 1 mit einer entfernt angeordneten weiteren Anzeigeeinrichtung oder einer Steuereinrichtung möglich ist und/oder eine Energieversorgung der Vorrichtung 1 durch eine externe Energiequelle.

Das Gehäuse 30 weist einen flanschartigen Grundkörper 62 und eine darauf aufgesetzten Gehäusekappe 64 auf. An der Verbindungsstelle bildet der Grundkörper 62 eine Absatz 66 aus, dessen Umfangsfläche in Bezug auf die eine Längsachse des Anschlussstücks 32 und auch des Gehäuses 30 bildende Einschraubachse 20 zylindrisch oder leicht kegelförmig ausgebildet sein kann und dadurch eine sichere Führung beim Aufstecken der Gehäusekappen 64 bildet. Die Verbindung zwischen Gehäusekappe 64 und Grundkörper 62 kann beispielsweise durch Schweißen, Löten, Kleben, oder dergleichen erfolgen. Alternativ oder ergänzend wäre auch ein Aufstecken, Verklemmen, Bördeln oder Verschrauben möglich. In manchen Anwendungsfällen ist es vorteilhaft, wenn die Verbindung fluiddicht ist, beispielsweise durch eine umlaufende Schweißnaht.

Die Anzeigeeinrichtung 8 ist auf einer Außenumfangsfläche der Gehäusekappe 64 angeordnet und kann gemeinsam mit dem Sensorelement 6 und der in dem Gehäuse 30 festgelegten Auswerteeinrichtung 54 um die Einschraubachse 20 gedreht werden, sodass die Anzeigeeinrichtung 8 nach dem Einschrauben der Vorrichtung 1 in die Abschlusswand 14 der Einrichtung 2 in die gewünschte Position gedreht werden kann. In einigen Anwendungsfällen kann es vorteilhaft sein, wenn die Verbindungseinrichtung 10 zentrisch in Bezug auf die Einschraubachse 20 an dem stirnseitigen Ende des Gehäuses 30 angeordnet ist oder auch an der Außenumfangsfläche des Gehäuses 30, beispielsweise benachbart zu oder diametral gegenüber der Anzeigeeinrichtung 8.

Der Grundkörper 62 weist auf seiner dem Anschlusskörper 4 zugewandten Stirnseite eine plane Anlagefläche auf. Vorzugsweise an oder nahe der Bohrung für die Aufnahme des Anschlussstücks 32 können der Grundkörper 62 oder der Anschlusskörper 4 eine umlaufende Ringnut oder - wie im dargestellten Ausführungsbeispiel - eine Fase 68 aufweisen, durch die ein Hohlraum gebildet ist, in welche ein die Reibung bei der Drehbewegung erhöhendes Reiberhöhungsmittel 72 eingesetzt werden kann, im dargestellten Ausführungsbeispiel eine dritte Ringdichtung. Dadurch wird eine Sicherung der Drehposition des Gehäuses 30 gegenüber dem Anschlusskörper 4 gegen unbeabsichtigtes oder unerwünschtes Drehen gewährleistet. Durch die Ringdichtung wird außerdem eine zusätzliche Abdichtung der Vorrichtung 1 gewährleistet, insbesondere gegen ein Eindringen von Schutz oder Feuchtigkeit von außen nach innen.

An seinem dem Sensorelement 6 zugewandten Ende weist der Grundkörper 62 einen stutzenförmigen Endabschnitt 74 auf, der auf seiner Stirnseite mittels einer umlaufenden Schweißnaht 76 drehfest mit dem Anschlussstück 32 verbunden ist. Durch diese Verbindung erfolgt auch die Positionierung des Anschlussstücks 32 in dem Anschlusskörper 4, mithin die Vorspannung auf die zweite Ringdichtung 42.

Das Anschlussstück 32 weist an seinem dem Sensorelement 6 zugewandten Ende eine stufenförmige Aufweitung der Bohrung 44 auf, mittels welcher die Kontur der Bohrung in dem Anschlussstück 32 angepasst und insbesondere in Übereinstimmung gebracht ist mit der Bohrung 78 im Sensorelement 6. Die dem Sensorelement 6 zugewandte endseitige Stirnfläche des Anschlussstücks 32 ist kegelförmig verjüngt und kann mit einer entsprechenden Formgebung am zugehörigen Ende des Sensorelements 6 derart zusammenwirken, dass auf einfache und sichere Weise eine Zentrierung des Sensorelements 6 auf dem Anschlussstück 32 gewährleistet ist.

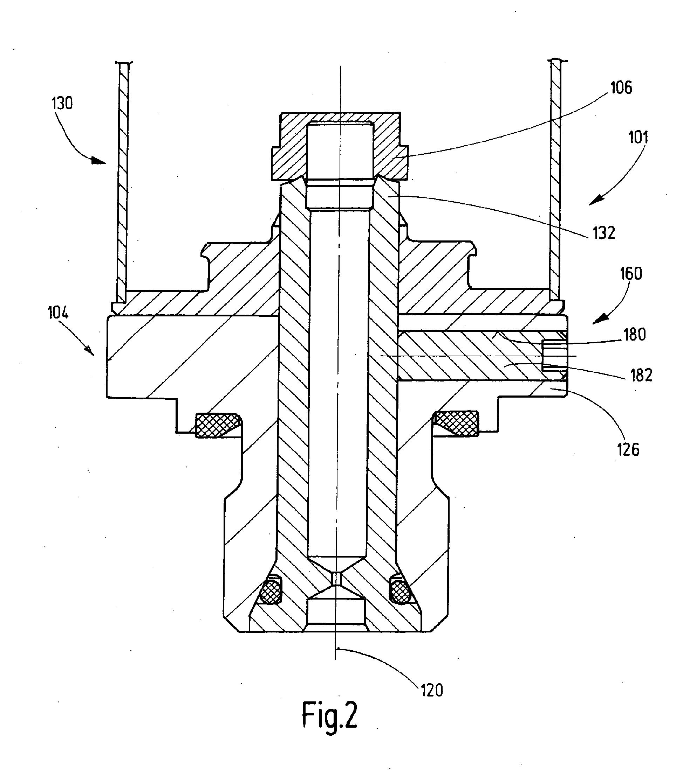

Die Fig. 2 zeigt einen Ausschnitt eines zweiten Ausführungsbeispiel der Erfindung. Im Unterschied zum ersten Ausführungsbeispiel weist die Vorrichtung 101 eine Feststelleinrichtung 160 auf, durch welche die Drehbeweglichkeit des Sensorelements 106 gegenüber dem Anschlusskörper 104 lösbar feststellbar ist. Hierzu ist bei der Vorrichtung 101 im Bereich des flanschartig verbreiterten Abschnitts 126 des Anschlusskörpers 104 eine im Wesentlichen rechtwinklig zur Einschraubachse 120 verlaufende und von der Außenumfangsseite bis zur Bohrung für die Aufnahme des Anschlussstücks 132 sich erstreckende Gewindebohrung 180 vorgesehen. In die Gewindebohrung ist ein Gewindestift 182 einschraubbar, der in klemmende Anlage an das Anschlussstück 132 bringbar ist und dadurch das Anschlussstück 132 und mithin das Sensorelement 106 und das Gehäuse 130 lösbar drehfest mit dem Anschlusskörper 104 verbindet. Dementsprechend ist beim zweiten Ausführungsbeispiel auch auf die im ersten Ausführungsbeispiel als Reiberhöhungsmittel 72 eingesetzte dritte Ringdichtung verzichtet worden.

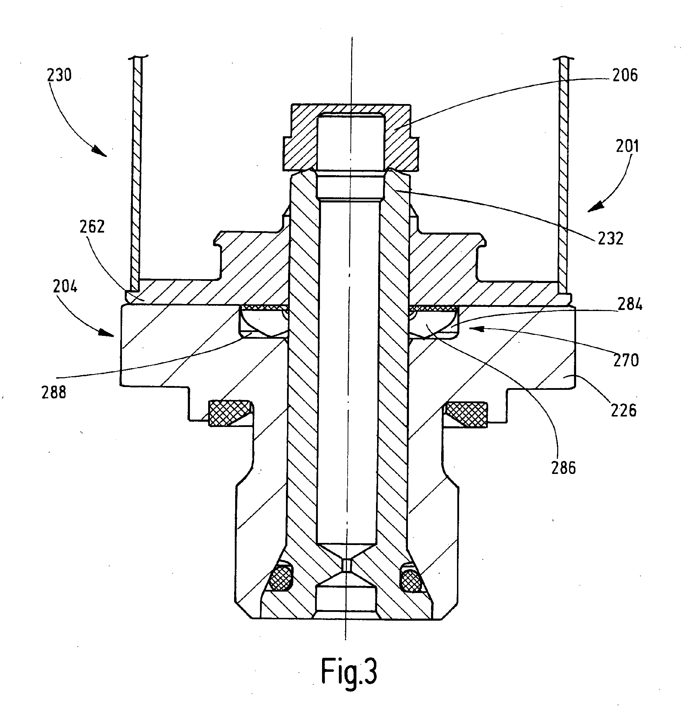

Die Fig. 3 zeigt einen Ausschnitt eines dritten Ausführungsbeispiels der Erfindung. Die Vorrichtung 201 weist eine Rasteinrichtung 270 auf, durch welche die Drehbewegung des Sensorelements 206 und mithin des Gehäuses 230 gegenüber dem Anschlusskörper 204 in vorgegebenen Positionen rastbar ist. Hierzu ist im Bereich des flanschartig verbreiterten Abschnitts 226 des Anschlusskörpers 204, insbesondere an seinem dem Gehäuse 230 zugewandten Ende die Bohrung für die Aufnahme des Anschlussstücks 232 radial aufgeweitet und in dem sich dadurch ergebenden Hohlraum 284 ist ein Federelement 286 angeordnet, insbesondere eine Federscheibe, die federverrastend mit vorzugsweise einstückig von dem Anschlusskörper 204 ausgebildeten Materialvorsprüngen 288 federverrastend zusammenwirkt. Das Federelement 286 kann hierzu an der planen Stirnseite des Grundkörpers 262 des Gehäuses 230 festgelegt sein.

## Patentansprüche

1. Vorrichtung (1) zum Ermitteln einer Zustandsgröße einer zu untersuchenden Einrichtung (2), wobei die Vorrichtung (1) einen Anschlusskörper (4) zum Verbinden der Vorrichtung (1) mit der zu untersuchenden Einrichtung (2), ein Sensorelement (6) zur Wandlung der Zustandsgröße in ein Messsignal sowie eine Anzeigeeinrichtung (8) für das Messsignal oder für ein daraus abgeleitetes Signal und/oder eine Verbindungseinrichtung (10) für Energieversorgungs- und/oder Signalleitungen aufweist, **dadurch gekennzeichnet, dass** das Sensorelement (6) drehfest mit der Anzeigeeinrichtung (8) und/oder der Verbindungseinrichtung (10) verbunden ist, und dass das Sensorelement (6) gegenüber dem Anschlusskörper (4) drehbar ist.

2. Vorrichtung (1) nach Anspruch 1, **dadurch gekennzeichnet, dass** die Anzeigeeinrichtung (8) und/oder die Verbindungseinrichtung (10) an einem Teil eines Gehäuses (30) der Vorrichtung (1) festgelegt ist, und dass das Sensorelement (6) drehfest mit dem Teil des Gehäuses (30) verbunden ist.

3. Vorrichtung (1) nach einem der vorangegangenen Ansprüche, **dadurch gekennzeichnet, dass** die Vorrichtung (1) eine Auswerteeinrichtung (52) aufweist, die mit dem Sensorelement (6) und mit der Anzeigeeinrichtung (8) und/oder der Verbindungseinrichtung (10) drehfest verbunden ist.

4. Vorrichtung (1) nach einem der vorangegangenen Ansprüche, **dadurch gekennzeichnet, dass** der Anschlusskörper (4) eine mindestens abschnittsweise hohlzylindrische Öffnung aufweist, in welcher ein Anschlussstück (32) drehbar gelagert ist, und dass das Sensorelement (6) drehfest mit dem Anschlussstück (32) verbunden ist.

5. Vorrichtung (1) nach Anspruch 4, **dadurch gekennzeichnet, dass** der Anschlusskörper (4) einen kegelförmigen Abschnitt (34) aufweist, und dass eine Dichtung (42) im Bereich des kegelförmigen Abschnitts (34) angeordnet ist.

6. Vorrichtung (1) nach Anspruch 5, **dadurch gekennzeichnet, dass** die Dichtung (42) in eine Ringnut (40) eingesetzt ist, die im Bereich des kegelförmigen Abschnitts (34) in dem Anschlusskörper (4) und/oder in dem Anschlussstück (32) angeordnet ist.

7. Vorrichtung (1) nach einem der Ansprüche 4 bis 6, **dadurch gekennzeichnet, dass** das Anschlussstück (32) sich von einer Anschlussstelle an der zu untersuchenden Einrichtung (2) bis in ein Gehäuse (30) der Vorrichtung (1) hinein erstreckt, und dass das Sensorelement (6) innerhalb des Gehäuses (30) angeordnet ist.

8. Vorrichtung (1) nach einem der Ansprüche 4 bis 7, **dadurch gekennzeichnet, dass** das Sensorelement (6) an einem stirnseitigen Ende des Anschlussstücks (32) angeordnet ist.

9. Vorrichtung (1; 101) nach einem der vorangegangenen Ansprüche, **dadurch gekennzeichnet, dass** die Vorrichtung (101) eine Feststelleinrichtung (160) aufweist, durch welche die Drehbeweglichkeit des Sensorelements (106) gegenüber dem Anschlusskörper (104) lösbar feststellbar ist.

10. - Vorrichtung (1; 201) nach einem der vorangegangenen Ansprüche, **dadurch gekennzeichnet, dass** die Vorrichtung (201) eine Rasteinrichtung (270) aufweist, durch welche die Drehbewegung des Sensorelements (206) gegenüber dem Anschlusskörper (204) in vorgegebenen Positionen rastbar ist.

11. Vorrichtung (1) nach einem der vorangegangenen Ansprüche, **dadurch gekennzeichnet, dass** die Vorrichtung (1) Reiberhöhungsmittel (72) aufweist, durch welche der bei einer Drehbewegung des Sensorelements (6) gegenüber dem Anschlusskörper (4) auftretende Reibwiderstand erhöht ist.
